# EUROPÄISCHE PATENTANMELDUNG

(11) **EP 0 578 213 A1**
(43) Veröffentlichungstag der Anmeldung: **12.01.1994**
(21) Anmeldenummer: 93110821.1
(22) Anmeldetag: 07.07.1993
(51) Int. Cl.: B29C 45/23

(54) **Nadelverschlussdüse für Kunststoff-Spritzmassen**

(30) Priorität: 09.07.1992 DE 4222510
(71) Anmelder: Ullisperger, Martha, D-50171 Kerpen (DE); Ullisperger, Edmund, D-50171 Kerpen (DE)
(72) Erfinder: Ullisperger, Edmund, D-50171 Kerpen (DE)
(74) Vertreter: Lippert, Hans-Joachim, Dipl.-Ing.

(57) **Zusammenfassung**

Nadelverschlußdüse für Kunststoff-Spritzmassen mit innenliegender Kammer für eine auf eine Verschlußnadel wirkende Feder weist einen Gehäuse-Grundkörper auf. Die Verschlußnadel (11) ist an dem der Federung (7) zugehrten Ende als ein zur Nadelspitze geschlossener Zylinder (12) ausgebildet. Der Zylinder (12) greift mit einem Gegenzylinder (13) als Hohlzylinder unter Dichtwirkung gleitend zusammen.

## Beschreibung

Die Erfindung bezieht sich auf eine Nadelverschlußdüse für Kunststoff-Spritzmassen mit innenliegender Kammer mit einer auf eine Verschlußnadel wirkenden Feder in einem Gehäuse-Grundkörper.

Spritzgußmaschinen für thermoplastische Stoffe, insbesondere für Kunststoffe, bestehen grundsätzlich aus zwei Komponenten, und zwar aus der Schließeinheit, mit welcher die Spritzgußform geschlossen und geöffnet wird und der Einspritzeinheit, bestehend aus einem beheizbaren Einspritz-Zylinder, in welchem die Spritzgußmasse (Kunststoff) plastifiziert und mit einem im Zylinder beweglichen und mit Druck beaufschlagbaren Kolben über eine geeignete Einspritzdüse in die Spritzgußform eingespritzt wird.

Die Viskosität der verflüssigten Kunststoffe ist unterschiedlich. Zähfließende Kunststoffe, mit niedrigem Schmelzpunkt, können über einfache, sogenannte offene Düsen in die Form eingespritzt werden, d.h. über Düsen, durch welche die Spritzgußmasse ohne Widerstand in die Spritzgußform eingespritzt werden kann. Bei Spritzgußmassen, deren Schmelztemperatur sehr hoch ist, wie beispielsweise bei Polyamiden, ist die Schmelze dünnflüssig und tritt aus, sobald der Einspritz-Zylinder innerhalb des Spritzzyklus von der Spritzgußform abgehoben wird.

Um niedrigviskose Kunststoffschmelzen verarbeiten zu können, hat man Verschlußdüsen konstruiert, welche die Kunststoffschmelze nur während des unter hohem Spritzdruck erfolgenden Einspritzvorganges durchlassen, während bei abgehobenem Spritz-Zylinder das Austreten der Schmelze aus der Düse verhindert wird. Die Austrittsöffnung, in der Regel eine Bohrung in der Düsenspitze, wird im Innenraum der Düse durch eine Verschlußnadel abgedichtet, welche in einer zylindrischen, druckdichten Führung unter Federdruck steht. Bei einer anderen Konstruktion wird der Druck auf die Verschlußnadel über Hebel außerhalb der Düse hydraulisch oder pneumatisch bewirkt.

Die bisher konstruierten Düsen haben den Nachteil, daß die Führung der Verschlußnadel nach längerem Gebrauch verschleißt. Infolgedessen tritt durch die Führung des Nadelkolbens Kunststoffschmelze aus, sogenannte Leckage, was zu unerwünschten Verschmutzungen der Spritzgußmaschine, Materialverlust und im Extremfall zu Druckverlust führen kann. Bei Verschlußdüsen mit innenliegender Druckfederung, insbesondere bei Verwendung von Tellerfedern, füllt sich die Federkammer allmählich mit Kunststoff, welcher verkrustet und insbesondere bei Verwendung von Tellerfedern deren Wirkung aufheben kann. Eine immer öfter nötige Demontage der Verschlußdüse und Reinigung der Federkammer mit entsprechendem Maschinenstillstand ist die Folge. Aus diesem Grund sieht man seit einiger Zeit bei Nadelverschlußdüsen mit innenliegender Federkammer große Leckagebohrungen vor.

Aufgabe der vorliegendenden Erfindung ist es daher, eine Nadelverschlußdüse für Kunststoff-Spritzmassen mit innenliegender Kammer mit einer auf eine Verschlußnadel wirkenden Feder in einem Gehäusegrundkörper so weiter zu bilden, daß das Auftreten einer Leckage vermieden wird.

Diese Aufgabe wird durch eine Nadelverschlußdüse mit den Merkmalen des Patentanspruchs 1 gelöst. Durch eine solche Ausbildung der Nadelverschlußdüse wird eine außerordentliche Dichtwirkung bei der Führung der Verschlußnadel innerhalb des Düsenkopfes erreicht. Bei der Verschlußdüse kann eine Leckage nicht mehr auftreten. Die Führung von Verschlußnadel und Führungsteil für diese bleibt während des Gebrauches und der Arbeit der Nadelverschlußdüse einwandfrei, wodurch die ursprüngliche Dichtwirkung aufrecht erhalten wird. Die Möglichkeit einer Leckage ist nicht gegeben.

Gemäß einer weiteren Ausgestaltung der Erfindung ist der Gegenzylinder im Grundkörper als Federkammer ausgebildet, wobei die Feder gegen die Verschlußnadel wirksam ist. Hierbei kann ein Kolben zwischengeschaltet sein. Der mit Dichtungspassung gefertigte Kolben überträgt den Druck der Federn, vorzugsweise Tellerfedern, auf das diese Öffnung verschließende Element, d.h. die Verschlußnadel.

Die Verschlußdüse besteht vorzugsweise aus einem Grundkörper, welcher auf einer Seite das Gewinde zum Befestigen des Düsenkörpers auf den Spritz-Zylinder und auf der entgegengesetzten Seite das Gewinde für die auswechselbaren Düsenköpfe trägt. Die Tiefe des Hohlzylinders und die Höhe des Gegenzylinders des Grundkörpers sind zweckmäßig gleich. Dadurch ergeben sich zwischen dem Hohlzylinder und der Federkammer neben der zylindrischen Dichtfläche zwei weitere, ringförmige Dichtflächen, welche wirksam werden, sobald durch den Einspritzdruck der Hohlzylinder zurückgedrückt wird.

Die Dichtwirkung des Hohlzylinders kann dadurch verstärkt werden, daß dieser durch den Einspritzdruck zusammengedrückt wird. Eine weitere Dichtungswirkung kann dadurch erreicht werden, daß die Stirnfläche des Hohlzylinders (13) des Grundkörpers (2) zugespitzt ist und daß die Bodenfläche (18) des geschlossenen Zylinders (12) mit einer der zugespitzten Stirnfläche des Hohlzylinders (13) entsprechenden Rille (18) versehen ist. Eine weitere Abdichtung läßt sich dadurch erzielen, daß die Verschlußnadel (11) mit einer Ringfläche (19) als Druckfläche versehen ist, durch die die Verschlußnadel (11) durch den Spritzdruck zur Freigabe der Düsenöffnung zurückdrückbar ist.

Nadelverschlußdüsen in der vorstehend beschriebenen Art können auch anstelle der Feder-Druckelemente mit außenliegenden hydropneumatischen Druckelementen betätigt werden. Zweckmäßigerweise ist die Federkammer (6) mit einer Entlüftungsbohrung (9) versehen ist.

Nachfolgend wird ein Ausführungsbeispiel der Erfindung erläutert:

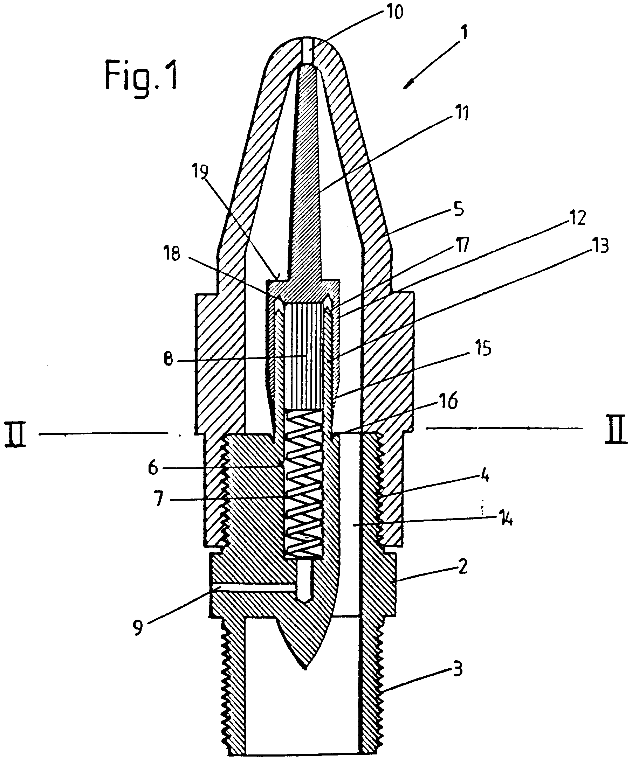

- Figur 1: zeigt eine Ausführungsform der Nadelverschlußdüse im Längsschnitt,

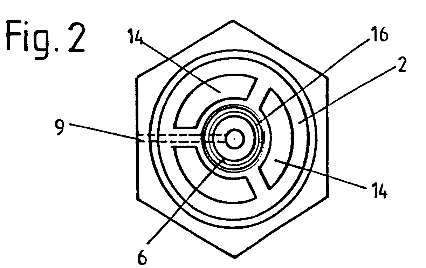

- Figur 2: ist ein Schnitt nach der Linie II - II der Figur 1.

Die Nadelverschlußdüse 1 weist einen Grundkörper 2 auf, der an dem einen Ende ein Gewinde 3 zum Befestigen an einem Spritzzylinder und an dem anderen Ende ein Gewinde 4 für einen auswechselbaren Düsenkopf besitzt. In dem Düsenkörper 2 befindet sich eine Federkammer 6, in der eine Feder 7 und ein Druckkolben 8 untergebracht sind.

In dem Grundkörper 2 befindet sich eine Entlüftungsbohrung 9 für die Federkammer 6.

Als Federn können vorzugsweise Tellerfedern verwendet werden. Der Düsenkörper 5 ist mit einer Düsenöffnung 10 versehen, die durch die Verschlußnadel abgedichtet gehalten wird. Zur Führung der Verschlußnadel ist ein zur Nadelspitze hin geschlossener Zylinder 12 an der Nadel 11 vorgesehen, der mit einem Gegenzylinder 13 gleitend und dichtend zusammengreift. Der Gegenzylinder 13 ist als Hohlzylinder ausgebildet und befindet sich an dem Grundkörper 2, wobei die Zylinder 12 und 13 gleitend und dichtend zusammengreifen.

Der untere Teil des Zylinders 12 der Verschlußnadel 11 ist bei 15 abgeschrägt, und zwar an der Außenfläche des Zylinders 12. Der dadurch entstandene schmale Rand des Zylinders 12 kann in eine entsprechende in den Grundkörper 12 eingedrehte Nut 16 eintauchen, wodurch eine weitere Dichtwirkung erzielt wird. Um eine noch bessere Abdichtung zu erzielen, kann man die obere Kante des Gegenzylinders 13 ebenfalls mit einer Abschrägung 17 vorzugsweise in Dachform versehen, wobei die Bodenfläche einer Innenseite des Zylinders 12 eine entsprechende zugespitzte Eindrehung 18 erhalten kann. Die obere Kante 17 des freistehenden Gegenzylinders 13 kann somit ebenfalls in den Boden des Zylinders 12 bei entsprechender Zuspitzung eintauchen. Die Dichtflächen 15, 16 und 17, 18 werden wirksam, sobald durch den Einspritzdruck der Zylinder 12 zurückgedrückt wird. Die Konstruktion bietet mehrere Dichtflächen an der Führung zwischen der Verschlußnadel 11 und dem freistehenden Gegenzylinder 13 des Grundkörpers 2. Mit 19 ist eine Ringfläche als Druckfläche bezeichnet, durch die der Spritzdruck die Nadel zurückdrückt, wodurch die Düsenöffnung soweit freigegeben wird, daß die Spritzgußmasse ohne Reibungswiderstände durch die Düsenöffnung austreten kann.

### BEZUGSZEICHEN

- 1: Nadelverschlußleiste
- 2: Grundkörper
- 3: Gewinde
- 4: Gewinde
- 5: Düsenkörper
- 6: Federkammer
- 7: Feder
- 8: Druckkolben
- 9: Entlüftungsbohrung
- 10: Düsenöffnung
- 11: Zylinder
- 12: Zylinder
- 13: Zylinder
- 14: Druckflußkanal
- 15: Abschrägung
- 16: Nut
- 17: Abschrägung
- 18: Eindrehung
- 19: Ringförmige Druckfläche

## Patentansprüche

1. Nadelverschlußdüse für Kunststoff-Spritzmassen mit innenliegender Kammer mit einer auf eine Verschlußnadel wirkendenden Feder in einem Gehäuse-Grundkörper, **dadurch gekennzeichnet,** daß die Verschlußnadel (11) an dem der Feder (7) zugekehrten Ende als ein zur Nadelspitze hin geschlossener Zylinder (12) ausgebildet ist und einen am Grundkörper (2) ausgebildeten Gegenzylinder (13) unter Dichtwirkung gleitend umgreift.

2. Nadelverschlußdüse nach Anspruch 1, **dadurch gekennzeichnet,** daß der Gegenzylinder (13) als Federkammer (6) in dem Grundkörper (2) ausgebildet ist und daß die Feder (7) gegen die Verschlußnadel (11) wirksam ist, wobei ein Kolben (8) zwischengeschaltet sein kann.

3. Nadelverschlußdüse nach Anspruch 1 oder 2, **dadurch gekennzeichnet**, daß die Tiefe des Zylinders (12) und die Höhe des Gegenzylinders (13) des Grundkörpers (2) gleich sind.

4. Nadelverschlußdüse nach einem der Ansprüche 1 bis 3, **dadurch gekennzeichnet**, daß die Stirnfläche des Gegenzylinders (13) des Grundkörpers (2) zugespitzt ist und daß die Bodenfläche (18) des geschlossenen Zylinders (12) mit einer der zugespitzten Stirnfläche des Gegenzylinders (13) entsprechenden Rille (18) versehen ist.

5. Nadelverschlußdüse nach einem der Ansprüche 1 bis 4, **dadurch gekennzeichnet**, daß die Verschlußnadel (11) mit einer Ringfläche (19) als Druckfläche versehen ist, durch die die Verschlußnadel (11) durch den Spritzdruck zur Freigabe der Düsenöffnung zurückdrückbar ist.

6. Nadelverschußdüse nach einem der Ansprüche 1 bis 5, **dadurch gekennzeichnet**, daß die Federkammer (6) mit einer Entlüftungsbohrung (9) versehen ist.
